**Europäisches Patentamt**

**European Patent Office**

**Office européen des brevets**

(11) Publication number : **0 483 076 A2**

## (12) EUROPEAN PATENT APPLICATION

(21) Application number : **91830265.4**

(22) Date of filing : **14.06.91**

(51) Int. Cl.⁵ : **B23D 21/04**

(30) Priority : **15.06.90 IT 4806790**

(43) Date of publication of application :
**29.04.92 Bulletin 92/18**

(84) Designated Contracting States :
**AT BE CH DE DK ES FR GB GR IT LI LU NL SE**

(71) Applicant : **Nevio, Nervo**
**(Via) Street Folco Portinari 14**
**Rome (IT)**

(72) Inventor : **Nevio, Nervo**
**(Via) Street Folco Portinari 14**
**Rome (IT)**

(54) **New super-rapid centrifugal system for the cutting and preparation of pipes.**

(57)    This engined system cuts pipes using the pressure of the centrifugal force on a blade which rotating cuts into the pipe untils it is completely detached : such system reduces considerably the dimensions of the cutting device.

As an indicative but not restrictive example let's consider the case of counterweights of about gr.250 each which can rotate at a speed of about 3000 revolutions per minute powered by an electric motor of only 500 watts.

In these conditions an half-inch zinc-coated steel pipe can be cut in 5/7 seconds.

The reduction through-put time and in the consuption of energy is self-evident.

FIGURA 1

FIGURA 2

TAVOLA I°

EP 0 483 076 A2

As is known, for the fitting of pipes on the job it is necessary to cut them to the desired measures, marking the pipe in a precise manner, without scrapes, to enable threading or beveling for soldered or welded connections.

This simple but indispensable operation is presently carried out in various ways both in industry and by final operators.

Omitting the cutting with a hand saw, which is slow and imprecise, three is the cutting with an abrasive disk or with a toothed disk, systems that level many scrapes on the release of the blade. There are also to be pointed out incision pipe-cutters, which thanks to a wheel-shaped steel blade driven by a screw on the wall of the pipe with its application point on the opposite side through bearings, rotating around the pipe thanks to a lever which is usually the screw itself. At each rotation there is a penetration of the blade. By maintaining the pressure on the blade through the screw, a complete cut is achieved.

This is presently the case both for manual pipe-cutters, with which it is indispensable to hold the pipe immobile in a vice, and for motorized system, which are usually part of a bench-mounted arrangement in which the machine is immobile and the pipe rotates.

Furthermore, in the system with a wheel-shaped blade a narrowing is formed inside the pipe due to the excessive pressure of the blade itself. This pressure is, however, necessary in order to limit the number of turns necessary to make the cut, which usually requires from one and a half to two minutes. For the same reason the blades often break and there is excessive wear and tear on the moving parts.

Another limitation is the enormous size and weight of the above-mentioned systems which does not permit their use on the job.

The purpose of the present invention is that of eliminating the above-mentioned inconveniences with a system and a completely new and automatic concept that relieves the operator of the task of choosing the thightening and cutting pressure, with all the advantages of safety, making standardized cuts that are suitable for the type of application that is intended.

With this system it is in fact possible to cut with a bevelled angulation or to form a more or less accentuated edge that better adapts itself to connections of a "grip or compression" type.

These operations can be carried out in only a few seconds, which distinguishes the present system from all the others.

The present invention is therefore intended for industry, which for production reasons cuts or assembles pipes of all types. It is also intended for installation companies or for individual operators who want a cut or preparation of the pipe that is qualitatively good with extremely brief and therefore economical execution times, with a complete piece of equipment, independent of vices or other accessories, and which permits cutting on the job.

It is also for fixed, bench-mounted installations, for which it could be supplied under the form of an accessory to be adapted to already-existing machinery such as lathes or disk cutters etc.

## DESCRIPTION

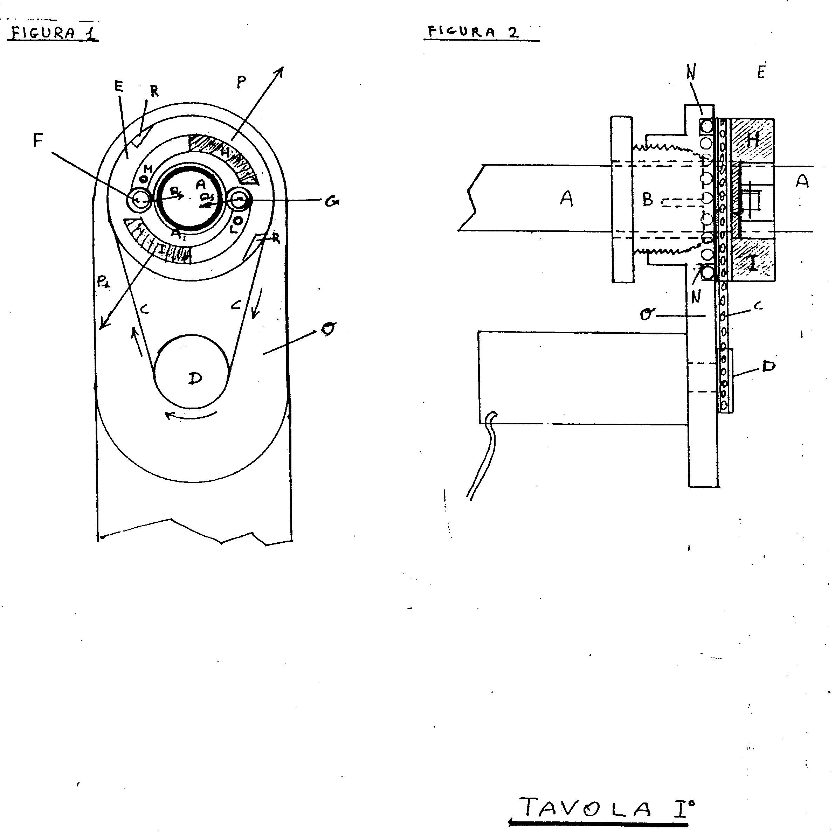

In the attached drawings, in fig. no.1 and no.2, respectively a front and side view, there is a functional and non-restrictive schematic of the industrial invention in which its functioning principal is demonstrated:

The pipe A is inserted through the hole A1 (fig.1).

The conical, pincers-like, metal ring B (fig.2) is tightened turning in the direction of the threading which is in the same direction as the rotation of the chain or belt C (fig.1/2) so that it is self-tightening.

The pipe is in a position to be cut to the desired measure. The power source D, through the chain C, brings to rotation the support plate E, on which are fastened, respectively, the blade F and the roller bearing G linked to two heavy masses H and I (fig.1). The fulcrum fasteners L and M are placed very close to the blade F and to the roller G. The rotation of the plate made possible by the bearing N , with respect to the fixed support and with the power source D, causes the masses H and I, which are heavier than G and F, and also aided by the point of application of the fulcrum, due to the effect of centrifugal force, to tend to spread along the direction of the vectors P and P1, obliging F and G to follow the vectors Q and Q1. That is to say, towards the pipe A.

The blade F at each rotation penetrates into the pipe A driven by the continuous thrust of the mass H while the pipe A is held centered by the counter-thrust of the roller G. Since the blade F as it gradually penetrates into the pipe A permits the mass H to exit more than I increasing the radius, to avoid bothersome vibrations one compensates by differentiating the masses in weight.

The mechanical block R (fig.1) impedes the complete exit of the masses I and H.

It is clear that without changing the principle, the accessory parts such as the system of blockage of the pipe, the hooking-up of the driving force and the constructional forms could be widely varied with respect to what has been described and illustrated.

## Claims

1. A new system of processing for the installation industry, characterized by the fact that in the cutting of pipes centrifugal and centripetal force is utilized.

2. Machinery, as in the previous claim, characterized by the fact that the movements necessary for the cut are made by a motor of any type.

3. As in the previous claim, characterized by the fact that the advancing of the blade by centrifugal force is completly automatic and regulatable for pressure according to the materials to be cut by adjusting the turns of the motor or the weight of the masses.

4. As in the previous claims, characterized by the fact that the system of blockage or thightening of the pipe can exploit the same principle of centrifugal force.

5. As in claims 1 and 2, characterized by the fact that the system of blockage can be manual or independent of the machine itself.

6. As in claims 1/2/3/4, characterized by the fact that the system of choice of the diameters can occur in an automatic manner, again through centrifugal force.

7. As in claims 1/2/3/4, characterized by the fact that the choice of the diameter to be cut can be manual.

8. As in the previous claims, characterized by the fact that the blade or blades, not necessarily wheel-shaped, can have any shape in order to form bevels for soldering and welding, edges to increase the grip of compression connections or grooves of any shape for the preparation of the pie at the coupling.

FIGURA 1

FIGURA 2

TAVOLA I°